# EUROPÄISCHE PATENTANMELDUNG

(11) **EP 3 267 372 A1**
(43) Veröffentlichungstag der Anmeldung: **10.01.2018**
(21) Anmeldenummer: 16178051.5
(22) Anmeldetag: 05.07.2016
(51) Int. Cl.: G06Q 10/06

(54) **TEIL- ODER VOLLAUTOMATISIERTE QUALITÄTSKONTROLLE EINES ARBEITSERGEBNISSES**

(71) Anmelder: ABB Schweiz AG, 5400 Baden (CH)
(72) Erfinder: Gutermuth, Georg, 69115 Heidelberg (DE); Cohen, Andrew, 68163 Mannheim (DE)
(74) Vertreter: Marks, Frank

(57) **Zusammenfassung**

Verfahren (100) zur Qualitätskontrolle eines Arbeitsergebnisses (1) mit folgenden Schritten:
• es wird eine Entscheidung (2), die bei der Erstellung des Arbeitsergebnisses (1) vielfach gefällt wurde und deren Ergebnis (3) als Auswahl einer von mehreren diskreten Möglichkeiten {m₁,...,mₙ} oder als Zahlenwert w ε [w₁, w₂] darstellbar ist, ermittelt (110);
• aus dem Arbeitsergebnis (1) wird das Ergebnis (3) der Entscheidung (2) für eine Vielzahl von Einzelfällen der Entscheidung (2) ausgewertet (120);
aus den ausgewerteten Ergebnissen (3) wird eine Häufigkeitsverteilung (4) H(m₁,...,mₙ) der diskreten Möglichkeiten {m₁,...,mₙ}, bzw. eine Häufigkeitsverteilung (4) H(w) der Zahlenwerte w ε [w₁, w₂], ermittelt (130) und dargestellt.

Zugehöriges Computerprogrammprodukt.

## Beschreibung

Die Erfindung betrifft ein Verfahren zur teilweise oder vollständig automatisierten Qualitätskontrolle eines Arbeitsergebnisses, bei dessen Zustandekommen ähnliche Entscheidungen vielfach gefällt wurden.

### Stand der Technik

Arbeitsergebnisse, etwa Computerprogramme, werden bei der Abnahme vielfach quantitativ auf die Einhaltung bestimmter Spezifikationen, Key Performance Indicators (KPI), geprüft. Für die Bewertung von Programmquelltext sind kommerzielle und freie Statische Analyse Werkzeuge, wie etwa Resharper, codeclimate oder sonarQube, am Markt verfügbar. Diese Tools prüfen den Programmquelltext nach zuvor festgelegten Regeln, die mit einstellbaren Schwellwerten parametrisiert sind.

Beispielsweise wird geprüft, ob die Verschachtelungstiefe des Quelltextes einen vorgegebenen Wert nicht überschreitet oder ob der Anteil der Kommentare am Quelltext in einem vorgegebenen Bereich liegt. Weiterhin wird beispielsweise die Anzahl Codezeilen pro Klasse oder Methode ausgewertet. Die Schwellwerte sind Erfahrungswerte, die von der verwendeten Programmiersprache abhängen.

Für Arbeitsergebnisse im Bereich der Automatisierungstechnik sind die genannten Tools nur eingeschränkt verwendbar. Die Programmiersprachen für Steuergeräte (programmable logic controllers, PLC) und verteilte Steuersysteme (distributed control systems, DCS), sowie die zugehörigen Compiler, sind vielfach herstellerspezifisch und haben dementsprechzend eine wesentlich geringere Benutzerbasis als verbreitete Hochsprachen wie C# oder Java. Dementsprechend sind auch Richtlinien, wie qualitativ hochwertiger Programmcode auszusehen hat, entweder gar nicht oder nicht in einer maschinell prüfbaren Form verfügbar. Daher wird Programmquelltext im Bereich der Automatisierungstechnik derzeit im Wesentlichen manuell geprüft. Das gleiche gilt z.B. für Bedienbildschirme oder Layout-Zeichnungen, für die es gar keine automatische Qualitätsprüfungen gibt.

### Aufgabe und Lösung

Es ist daher die Aufgabe der Erfindung, den Kreis der Arbeitsergebnisse, die einer effektiven automatisierten Qualitätskontrolle unterzogen werden können, zu erweitern.

Diese Aufgabe wird erfindungsgemäß gelöst durch ein Verfahren gemäß Hauptanspruch und ein zugehöriges Computerprogrammprodukt. Weitere vorteilhafte Ausgestaltungen ergeben sich aus den darauf rückbezogenen Unteransprüchen.

### Gegenstand der Erfindung

Im Rahmen der Erfindung wurde ein Verfahren zur Qualitätskontrolle eines Arbeitsergebnisses entwickelt. Bei diesem Verfahren wird eine Entscheidung, die bei der Erstellung des Arbeitsergebnisses vielfach gefällt wurde und deren Ergebnis als Auswahl einer von mehreren diskreten Möglichkeiten {m₁,...,mₙ} oder als Zahlenwert w ∈ [w₁, w₂] darstellbar ist, ermittelt. Aus dem Arbeitsergebnis wird das Ergebnis der Entscheidung für eine Vielzahl von Einzelfällen der Entscheidung ausgewertet. Aus den ausgewerteten Ergebnissen wird eine Häufigkeitsverteilung H(m₁,...,mₙ) der diskreten Möglichkeiten {m₁,...,mₙ}, bzw. eine Häufigkeitsverteilung H(w) der Zahlenwerte w ∈ [w₁, w₂], ermittelt. Die Häufigkeitsverteilung kann absolut oder relativ sein.

Es wurde erkannt, dass die Häufigkeitsverteilung in vielerlei Hinsicht ein aufschlussreiches Kriterium für die Qualität und Konsistenz des Arbeitsergebnisses ist und zugleich kein a-priori-Wissen darüber benötigt, wie ein konsistentes Arbeitsergebnis im jeweiligen Kontext auszusehen hat. Wird die Häufigkeitsverteilung beispielsweise als Histogramm aufgetragen, so sind Abweichungen vom Üblichen unmittelbar an den Rändern des Histogramms erkennbar, da sie deutlich seltener vorkommen als der Normalfall. Dementsprechend sind Inkonsistenzen oder gar Fehler mit höherer Wahrscheinlichkeit an Positionen in dem Arbeitsergebnis zu finden, an denen eine seltene Entscheidung gefällt wurde. Wird beispielsweise in einem Programmquelltext durchgehend Bezug auf einen bestimmten Kanon an Schriftarten, Programmbibliotheken oder anderen Ressourcen genommen und nur an ganz wenigen Stellen oder gar nur an einer Stelle eine nicht zu diesem Kanon gehörende Ressource verwendet, so liegt der Verdacht nahe, dass hier eine Inkonsistenz oder gar ein Fehler vorliegt. Um diese Stelle aufzufinden, ist es nicht einmal nötig, im Voraus die Zusammensetzung des besagten Kanons an Ressourcen zu kennen. Es genügt die abstrakte Kenntnis, dass bei der Erstellung des Programms an vielen Stellen immer wieder die Entscheidung gefällt werden musste, welche Ressource jeweils verwendet werden sollte.

Gerade eine isolierte Stelle, die nicht zum übrigen Programmquelltext passt, ließ sich nach dem bisherigen Stand der Technik kaum ausmachen. Zum Einen war diese Stelle unter großen Mengen an unauffälligen Arbeitsergebnissen (z.B. Quelltext) vergraben, zum Anderen wusste man nur sehr vage, wonach man überhaupt suchen sollte. Ein Gewinn an Effizienz bei der Prüfung lässt sich bereits erreichen, wenn der zu prüfende Quelltext auf diejenigen Stellen reduziert wird, die zu den Rändern der Häufigkeitsverteilung korrespondieren, wo also beispielsweise Ressourcen verwendet werden, die sonst nirgends verwendet werden. Die Menge des zu prüfenden Quelltextes lässt sich damit im Idealfall um 90 % oder mehr reduzieren.

Es wurde erkannt, dass speziell in der Automatisierungstechnik und industriellen Steuerungstechik nicht nur die geringe Benutzerbasis der verwendeten Programmiersprachen eine Konsistenzprüfung anhand vorher festgelegter Kriterien stark erschwert. Auch die Anwendungen selbst sind häufig äußerst spezifisch, so dass es wenige sich wiederholende Muster gibt, aus denen sich derartige Kriterien ableiten ließen. Vielfach fehlen auch die Ressourcen, fertige Arbeitsergebnisse zu Kriterien, wie "guter" Programmquelltext auszusehen hat, zu abstrahieren. Dies gilt um so mehr, als sich in der Automatisierungstechnik die Pflichenhefte häufig ändern, was den Arbeitsaufwand für die Erstellung eines herkömmlichen regelbasierten Tools für die Konsistenzprüfung zunichte machen kann. Das Verfahren gemäß der Erfindung ist auf derartiges a-priori-Wissen nicht angewiesen.

Es wurde weiterhin erkannt, dass in der Automatisierungstechnik das gelieferte Gesamtprodukt in der Regel mehr als nur Software umfasst. Vielfach besteht das Produkt zum größten Teil aus Hardware, und der Rest umfasst neben Software beispielsweise noch Dokumentationstexte und grafische Bedienoberflächen. Nach dem bisherigen Stand der Technik war allein die Software automatisch auf Konsistenz prüfbar, und dieses nur in bestimmten Aspekten. Da das Verfahren gemäß der Erfindung kein a-priori-Wissen benötigt, kann es auf beliebige maschinenlesbare Arbeitsergebnisse angewendet werden, also auch beispielsweise auf die Layoutdokumente, Dokumentationstexte oder das grafische Layout von Bedienoberflächen. Hier gibt es in der Regel nur sehr abstrakte Vorgaben für eine gute Qualität, etwa, dass der Dokumentationstext "leicht verständlich" sein sollte oder dass die Bedienoberfläche "einen aufgeräumten Eindruck machen sollte". In einem Dokumentationstext können beispielsweise die Wahl bestimmter sprachlicher Konstrukte, die Wortwahl oder die Länge oder Schachteltiefe von Sätzen Gegenstand der Häufigkeitsverteilung sein. Aus der Häufigkeitsverteilung ist dann beispielsweise ersichtlich, ob im Wesentlichen ein Schreibstil konsequent durchgezogen wurde oder ob es Brüche gleich welcher Art gibt, die allgemein als störend in Bezug auf die Verständlichkeit empfunden werden. In einer Bedienoberfläche können beispielsweise geometrische Kenngrößen der Anordnung von Bedienelementen oder Anzeigen zueinander Gegenstand der Häufigkeitsverteilung sein. Der geforderte "aufgeräumte Eindruck" lässt sich dann etwa daran messen, ob die Häufigkeitsverteilung in der geometrischen Anordnung eine wie auch immer geartete Regelmäßigkeit erkennen lässt.

Selbst die Hardware ist theoretisch der Qualitätskontrolle mit dem Verfahren gemäß der Erfindung zugänglich, wenn es gelingt, von ihr eine geeignete maschinenlesbare Repräsentation anzufertigen. Hierfür können beispielsweise Konstruktionsunterlagen oder auch mit beliebigen bildgebenden Verfahren angefertigte Bilder herangezogen werden.

Die Häufigkeitsverteilung muss nicht manuell ausgewertet werden. Alternativ oder auch in Kombination können beliebige quantitative statistische Verfahren und Kenngrößen verwendet werden.

In einer besonders vorteilhaften Ausgestaltung der Erfindung wird eine Entscheidung gewählt, die bei der Erstellung des Arbeitsergebnisses zu den Zeitpunkten {t₁,...,tₙ}=:T gefällt wurde. Das Ergebnis der Entscheidung wird dann für die Zeitpunkte {t₁,...,tₘ}=:Q, Q ⊆ T, ausgewertet. Durch Erfassung und Berücksichtigung der Zeitpunkte {t₁,...,tₙ}, zu denen die Entscheidung gefällt wurde, kann die Aussagekraft der Häufigkeitsverteilung weiter gesteigert werden.

Beispielsweise kann die Menge Q so gewählt werden, dass sie zu jedem Teilintervall I von 10 % der Zeitspanne, innerhalb der das Arbeitsergebnis erstellt wurde, mindestens zwei Zeitpunkte t₁, t₂ mit t₁, t₂ ∈ I enthält. Es ist dann sichergestellt, dass die Häufigkeitsverteilung eine Aussage über die gesamte Erstellung des Arbeitsergebnisses liefert und nicht nur über eine Episode innerhalb dieser Erstellung.

In einer weiteren besonders vorteilhaften Ausgestaltung der Erfindung wird die Menge Q so gewählt, dass sie zu mindestens einer zeitlichen Pause P=[p₁, p₂], die während der Erstellung des Arbeitsergebnisses eingelegt wurde, mindestens zwei Zeitpunkte t₁, t₂ mit t₁<p₁<p₂<t₂ enthält. Das Verfahren macht sich dann die Erkenntnis zu Nutze, dass gerade beim Unterbrechen und späteren Fortsetzen der Arbeit an dem Arbeitsergebnis bevorzugt Inkonsistenzen entstehen können. Wird das Arbeitsergebnis beispielsweise in zwei Sitzungen erstellt und zwischen den beiden Sitzungen eine andere Tätigkeit ausgeübt, so kann das in jeder der beiden Sitzungen Erarbeitete für sich genommen konsistent sein, aber diese beiden Teile des gesamten Arbeitsergebnisses können untereinander inkonsistent sein. Beispielsweise wird beim Schreiben und Programmieren dann, wenn eine Wahlmöglichkeit zwischen mehreren in Frage kommenden Konstrukten oder Ressourcen besteht, die Entscheidung unbewusst bevorzugt in Richtung derjenigen Konstrukte oder Ressourcen gelenkt, die der Autor bzw. Programmierer zuletzt verwendet hat. In dem genannten Beispiel kann also die zwischenzeitlich ausgeübte Tätigkeit auf den in der zweiten Sitzung erstellten Teil des Arbeitsergebnisses abfärben.

In einer besonders vorteilhaften Ausgestaltung der Erfindung wird eine oberhalb oder unterhalb eines vorgegebenen Schwellwerts s liegende absolute oder relative Häufigkeit H(x) einer vorgegebenen Möglichkeit x ∈ {m₁,...,mₙ}, bzw. eine oberhalb oder unterhalb von s liegende absolute oder relative Häufigkeit H([y₁, y₂]) von Werten aus einem vorgegebenen Intervall [y₁, y₂] ⊆ [w₁, w₂], in der Häufigkeitsverteilung als Signal für eine Inkonsistenz in dem Arbeitsergebnis gewertet. Wird beispielsweise eine Programmbibliothek oder eine Schriftart im gesamten Arbeitsergebnis nur ein einziges Mal verwendet, so liegt nach dem zuvor Gesagten der Verdacht nahe, dass es sich hier um einen so nicht geplanten Ausreißer handelt.

Dabei kann bevorzugt der Schwellwert s, die Möglichkeit x, und/oder mindestens ein Endpunkt des Intervalls [y₁, y₂], aus der Höhe und/oder der Position eines Maximums der Häufigkeitsverteilung, und/oder aus der Standardabweichung σ der Häufigkeitsverteilung, ermittelt werden. Die Erkennung von Ausreißern ist dann noch weiter automatisiert und von a-priori-Wissen unabhängig. Nach dem bisherigen Stand der Technik war es sehr umständlich, auf manuellem Wege potentielle Marker für Inkonsistenzen und zugehörige quantitative Schwellwerte aufzustellen. So kann ein Programmierprojekt mehrere Dutzend Bibliotheken verwenden, die jeweils mehrere Dutzend Elemente enthalten.

Sofern a-priori-Wissen über die Sinnhaftigkeit bestimmter Möglichkeiten x oder Wertbereiche [y₁, y₂] vorhanden ist, kann dieses die rein statistische Auswertung in organischer Weise ergänzen. Beispielsweise können für Schriftgrößen oder Abstände zwischen Elementen einer grafischen Bedienoberfläche von vornherein sinnvolle Bereiche angegeben werden.

Bevorzugt können verschiedene Schwellwerte s vorgesehen sein, deren Über- oder Unterschreiten eine abgestufte Reaktion auslöst. So kann beispielsweise das Überschreiten eines ersten Schwellwerts eine Warnung auslösen, die noch übergangen werden kann, während das Überschreiten eines zweiten, höheren Schwellwerts eine Fehlermeldung auslöst, die ein Eingreifen erzwingt.

In einer weiteren besonders vorteilhaften Ausgestaltung der Erfindung wird in der Häufigkeitsverteilung mindestens ein Hyperlink von mindestens einer Möglichkeit a ∈ {m₁,...,mₙ}, und/oder von ihrer Häufigkeit H(a), bzw. von mindestens einem Bin [b₁, b₂] ⊆ [w₁, w₂] der Zahlenwerte w, und/oder seiner Häufigkeit H([b₁, b₂]), auf mindestens eine Position in dem Arbeitsergebnis gesetzt wird, an der eine Entscheidung, die zu der Häufigkeit H(a) bzw. H([b₁,b₂]) beigetragen hat, gefällt wurde. So kann beispielsweise eine Häufigkeitsverteilung der in einer grafischen Bedienoberfläche verwendeten Schriftarten unmittelbar auf diejenigen Stellen in der programmtechnischen Beschreibung der Bedienoberfläche verweisen, an denen die jeweilige Schriftart verwendet wird. Gerade wenn eine Schriftart nur wenige Male oder sogar nur einmal verwendet wird, ist die entsprechende Stelle so schnell auffindbar und sogar automatisiert durch eine häufiger verwendete Schriftart ersetzt werde. Die Alternativen können automatisch vorgeschlagen oder manuell gewählt werden.

Nach dem zuvor Gesagten wird besonders vorteilhaft ein Computerprogramm, eine graphische Bedienoberfläche oder ein technischer Dokumentationstext als Arbeitsergebnis für die Prüfung gewählt.

Ist das Arbeitsergebnis ein Computerprogramm, wird vorteilhaft insbesondere die einer bestimmten von mehreren verfügbaren Programm- oder Grafikbibliotheken m₁, ..., mₙ als Entscheidung gewählt. Häufig gibt es zwischen solchen Bibliotheken Überscheidungen dahingehend, dass eine vergleichbare Funktionalität wahlweise mit einem Element aus einer ersten Bibliothek oder mit einem Element aus einer zweiten Bibliothek realisiert werden kann. Wird nun beispielsweise in der Häufigkeitsverteilung erkannt, dass fast immer die erste Bibliothek verwendet wurde und nur einmal die zweite, so kann Letzteres als Ausreißer erkannt und korrigiert werden. Unter Umständen lassen sich Aufrufe selten genutzter Bibliotheken sogar soweit durch Aufrufe häufiger genutzer Bibliotheken ersetzen, dass die selten genutzten Bibliotheken komplett überflüssig werden und das Programm somit von diesen Bibliotheken nicht mehr abhängig ist. Jede dieser Abhängigkeiten ist eine potentielle Fehlerquelle oder kann zusätzlichen Wartungsaufwand verursachen. Speziell dynamisch gegen Bibliotheken gelinkte Programme können ohne Vorwarnung ihr Funktionieren einstellen, wenn bei einem turnusmäßigen Betriebssystem-Update eine Bibliothek gegen eine neue Version ausgetauscht wurde, in der die von dem Programm genutzte Funktion fehlt oder mit einer geänderten Syntax aufzurufen ist. Weiterhin belegen unnötige Bibliotheken Arbeitsspeicher, und ihr Laden beim Programmstart kostet zusätzlich Zeit.

Auch innerhalb einer Bibliothek kann beispielsweise die Verteilung der Häufigkeiten, mit der die einzelnen Elemente aufgerufen werden, untersucht werden. So kann beispielsweise untersucht werden, ob eine Bibliothek dahingehend optimal ausgenutzt wird, dass die meisten in ihr enthaltenen Elemente auch tatsächlich verwendet werden. Werden beispielsweise nur 10 % der Elemente tatsächlich genutzt, so liegt der Verdacht nahe, dass die Bibliothek für den konkreten Einsatzzweck nicht optimal ausgewählt wurde und die gleiche Funktionalität eventuell mit einer schlankeren, besser ausgewählten Bibliothek bereitgestellt werden könnte. Gerade in der Automatisierungstechnik sind Arbeitsspeicher, Massenspeicher und andere Hardwareressourcen, etwa auf Feldgeräten, begrenzt. Es kann daher sinnvoll sein, ein Programm auf diese Weise abzuspecken und Speicherbedarf sowie Ladezeit zu reduzieren.

Nach dem zuvor Gesagten ist es auch besonders vorteilhaft, eine grafische Bedienoberfläche, und/oder ihre Beschreibung in Form eines Computerprogramms, als Arbeitsergebnis für die Prüfung zu wählen. Gerade diese Bedienoberflächen ließen sich bislang nicht in automatisierter Weise prüfen, da die vagen verbalen Vorgaben nicht maschinell verarbeitbar waren. Zugleich sind Inkonsistenzen oder Fehler in Bedienoberflächen schwerer feststellbar als in Programmen, da sie meist nicht unmittelbar eine Fehlfunktion bewirken, sondern lediglich die intuitive Bedienbarkeit verschlechtern.

Eigenschaften grafischer Bedienoberflächen, die bei deren Erstellung immer wieder ähnliche Entscheidungen erforderlich machen, sind beispielsweise Vorder- und Hintergrundfarben, Liniendicken, Schriftarten und die Positionierung von Elementen zueinander. Daher wird in einer besonders vorteilhaften Ausgestaltung der Erfindung die Auswahl einer von mehreren möglichen Schriftarten für ein Darstellungselement der Bedienoberfläche, und/oder eine absolute oder relative Positionsangabe für das Darstellungselement, als Entscheidung gewählt, die zum Gegenstand der Häufigkeitsverteilung gemacht wird.

Speziell eine Konsistenz bezüglich der verwendeten Schriftarten ließ sich nach dem bisherigen Stand der Technik nur schwer erzielen. Vielfach haben unterschiedliche Schriftarten ein ähnliches Erscheinungsbild, so dass die Verwendung einer falschen Schriftart auf der fertigen Bedienoberfläche nicht direkt ins Auge fällt. Werden jedoch mehrere ähnliche, aber nicht exakt gleiche Schriftarten innerhalb einer Bedienoberfläche gemischt, so beanspruchen die subtilen Unterschiede unbewusst die Aufmerksamkeit des Betrachters, so dass die Bedienoberfläche insgesamt als schwer einsichtig bzw. umständlich empfunden wird. Die eigentliche Information, die die Bedienoberfläche vermitteln soll, wird also gleichsam mit einem Grauschleier überzogen. Weiterhin beansprucht die Bedienoberfläche zusätzlichen Speicherplatz, wenn sie zusammen mit diversen unnötigen zusätzlichen Schriftarten ausgeliefert wird, bzw. es kommt zu Fehlern, wenn eine ungewöhnliche Schriftart verwendet wird, die auf dem Kundensystem nicht installiert ist. Bestimmte Zeichen werden dann unter Umständen gar nicht angezeigt oder in schwer vorhersehbarer Weise durch ihre Entsprechungen in anderen, vorhandenen Schriftarten ersetzt.

In den Versuchen der Erfinder konnte speziell bei der Erstellung von Bedienoberflächen mit dem Verfahren gemäß der Erfindung der Zeitaufwand für die Qualitätskontrolle und das Debugging deutlich reduziert werden. Weiterhin konnte die letztendlich erreichte Qualität gesteigert werden.

Das Verfahren kann insbesondere computerimplementiert durchgeführt werden. Daher bezieht sich die Erfindung auch auf ein Computerprogrammprodukt mit maschinenlesbaren Anweisungen, die, wenn sie auf einem Computer oder auf einem Steuergerät ausgeführt werden, den Computer oder das Steuergerät dazu veranlassen, ein Verfahren gemäß der Erfindung auszuführen.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
Figur 1: Ausführungsbeispiel des Verfahrens 100 an einem Computerprogramm 10.
Figur 2: Häufigkeitsverteilung 4 der Ausnutzung der Elemente in der Bibliothek 11.
Figur 3: Häufigkeitsverteilung 4 der Schriftarten 32-37 für Elemente 31 einer Bedienoberfläche 30.
Figur 4: Häufigkeitsverteilung 4 des Abstandes d zwischen Elementen 31 einer Bedienoberfläche 30.

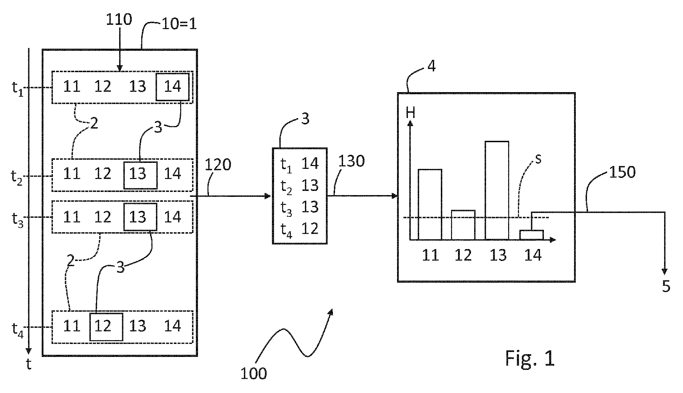

Figur 1 verdeutlicht schematisch ein Ausführungsbeispiel des Verfahrens 100 gemäß der Erfindung. Das Arbeitsergebnis 1, dessen Qualität und Konsistenz zu prüfen ist, ist ein Computerprogramm 10. Bei der Erstellung des Programms 10 musste der Programmierer sich zu den hier beispielhaft eingezeichneten Zeitpunkten t1 bis t4 auf der Zeitachse t jeweils entscheiden, auf welche der hier beispielhaft angegebenen vier Programmbibliotheken 11 bis 14 das Programm an der entsprechenden Stelle zugreifen soll.

In Schritt 110 des Verfahrens wird zunächst festgelegt, dass genau diese Entscheidung 2 über die Auswahl der Programmbibliothek 11-14 zum Gegenstand der weiteren Untersuchung gemacht wird. In Schritt 120 wird das komplette Programm 10 daraufhin analysiert, an welcher Stelle die Entscheidung **2** jeweils zu welchem Ergebnis **3** geführt hat. Dabei werden auch die Zeitpunkte (hier beispielhaft **t1** bis **t4**), zu denen der Programmierer die Entscheidung **2** jeweils gefällt hat, erfasst. Diese Zeitpunkte sind beispielsweise über ein Versionierungssystem, mit dem der Quelltext des Programms **10** erstellt wurde, zumindest näherungsweise bestimmbar. In Schritt **130** wird schließlich eine Verteilung **4** der Häufigkeiten **H** ermittelt, mit denen die Entscheidung **2** jeweils das Ergebnis **3** erbracht hat, dass die Programmbibliothek **11**, **12**,**13** bzw. **14** verwendet wird.

In Figur 1 ist die Häufigkeitsverteilung **4** als Histogramm aufgetragen. Das Histogramm ist aus den Ergebnissen **3** von mehr Entscheidungen **2** zusammengesetzt, als in Figur 1 beispielhaft im Einzelnen eingezeichnet sind. Das Histogramm zeigt, dass die Bibliothek **13** am häufigsten genutzt wird, gefolgt von der Bibliothek **11**. Am wenigsten genutzt wird die Bibliothek **14**. Anhand des Schwellwerts **s** wird schließlich im Schritt **150** festgestellt, dass es sich bei der Nutzung der Bibliothek **14** um einen Ausreißer handelt. Dieser Ausreißer wird als Inkonsistenz **5** gewertet. Die Darstellung des Histogramms kann einen Benutzer dabei unterstützen, den Schwellwert s geeignet anzupassen.

Neben statistischen Ausreißern, also Programmstellen, die "einfach nicht zum Rest des Programms passen" und insofern schlechten Stil darstellen, lassen sich mit der Häufigkeitsverteilung **4** auch Abweichungen von Kundenanforderungen unmittelbar einsichtig prüfen. So kann beispielsweise eine Vorgabe darin bestehen, dass nur maximal drei verschiedene Bibliotheken genutzt werden sollen, ohne Angabe, welche genau dies sein sollen. Das Histogramm zeigt unmittelbar an, dass diese Anforderung nicht erfüllt ist. Die Aufgabe kann beispielsweise auch darin bestehen, das Computerprogramm **10** von der Verwendung der Bibliotheken **12** und **14** auf die Verwendung der Bibliotheken **11** und **13** zu migrieren. Das Histogramm zeigt auch in diesem Fall unmittelbar an, dass die Aufgabe noch nicht erledigt ist.

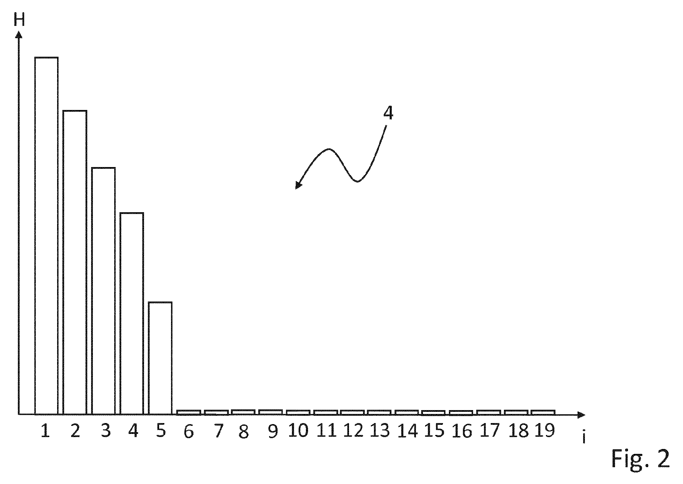

Figur 2 verdeutlicht schematisch, wie die optimale Ausnutzung der Programmbibliothek **11** überprüft werden kann, indem die Häufigkeit **H** untersucht wird, mit der ihre (hier beispielhaft 19) Elemente aufgerufen werden. Die untersuchte Entscheidung **2** ist also die Entscheidung, genau eines der in der Bibliothek enthaltenen Elemente zu verwenden. Über dem von i=1 bis i=19 laufenden Index i des Elements ist die jeweilige Häufigkeit **H** aufgetragen, mit der das Ergebnis **3** der Entscheidung **2** auf die Verwendung des Elements i lautete.

Das Histogramm zeigt, dass nur die fünf Elemente mit Indizes i=1 bis i=5 rege genutzt werden und der Rest der Bibliothek **11** im Wesentlichen brach liegt. Dies wiederum ist ein Indiz dafür, dass die Bibliothek **11** für ihren Einsatzzweck nicht optimal ausgewählt wurde. Eine Bibliothek, die nur die fünf wirklich genutzten Elemente enthält, hätte den gleichen Zweck erfüllt und keinen unnötigen Ballast in Form ungenutzter Elemente in das Programm **10** eingebracht.

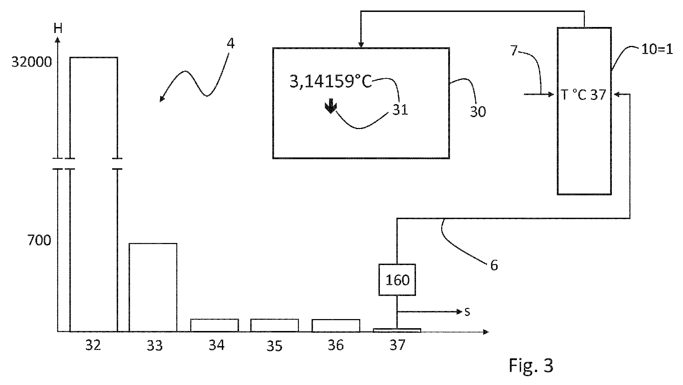

Figur 3 zeigt eine Häufigkeitsverteilung **4**, die in einem weiteren Ausführungsbeispiel des Verfahrens **100** entsteht. Die gewählte Entscheidung **2** ist hier, welche Schriftart für Anzeigeelemente **31** der grafischen Bedienoberflächen **30** eines industriellen Steuerungssystems gewählt worden ist. Die Schrift **32** ist Calibri, die Schrift **33** ist Wingdings **3**, die Schrift **34** ist Marlett, die Schrift **35** ist Tahoma, die Schrift **36** ist Constantia, und die Schrift **37** ist Arial.

Die Häufigkeitsverteilung **4** ermöglicht eine Prüfung der verwendeten Schriftarten auf Plausibilität und Konsistenz, ohne auf die Details des vom dem Steuerungssystem kontrollierten Prozesses eingehen zu müssen oder auch nur eine Kenntnis darüber haben zu müssen, welche Schriftarten laut Kundenspezifikation als Soll-Zustand gewünscht werden. Die Analyse des Ist-Zustandes liefert bereits die Information, dass als Standardschriftart anscheinend die Schriftart **32** (Calibri) vorgesehen ist und nur für Sonderzeichen die Schriftart **33** (Wingdings 3). Demgegenüber scheint es sich bei der Nutzung der Schriftarten **34** bis **37** um Ausreißer zu handeln, die zumindest genauer zu hinterfragen sind. Weiterhin kann ein erfahrener Projektleiter bzw. Qualitätsinspektor auch aus dem quantitativen Verhältnis zwischen der Nutzung der Standardschriftart **32** einerseits und der Schriftart **33** für Sonderzeichen andererseits Rückschlüsse ziehen. In dem in Figur 3 gezeigten Beispiel erscheint der Anteil der Sonderzeichen überhöht und sollte daher ebenfalls hinterfragt werden.

In dem in Figur 3 gezeigten Beispiel ist die Bedienoberfläche **30** durch ein Computerprogramm **10** beschrieben, das insoweit als das zu untersuchende Arbeitsergebnis **1** anzusehen ist. In der Häufigkeitsverteilung **4** ist in Schritt **160** des Verfahrens **100** ein Hyperlink **6** auf diejenige Stelle **7** in dem Programm **10** gesetzt worden, an der die Schriftart **37** aufgerufen wird. Auf diese Weise kann diese Stelle **7** besonders leicht aufgefunden werden, so dass unmittelbar geprüft werden kann, ob die Nutzung der Schriftart **37** ihre Richtigkeit hat oder als Ausreißer anzusehen ist.

Ebenso ist vorgesehen, dass aus der Häufigkeitsverteilung **4** heraus die Möglichkeit eingeräumt wird, für jede Schriftart **32-37** Schwellwerte **s** für die Qualitätskontrolle festzulegen. Der Übersichtlichkeit halber ist dies in Figur 3 nur für die Schriftart **37** eingezeichnet. Beispielsweise kann bei Rechtsklick auf eine Schriftart **32-37**, bzw. auf die zugehörige Häufigkeit in der Verteilung **4**, ein Kontextmenü geöffnet werden, über das sowohl der Hyperlink **6** auf die zugehörige Stelle **7** im Programm **10** als auch eine Maske zum Setzen der Schwellwerte **s** zugänglich sind. Die Schwellwerte **s** können die Wirkung haben, dass eine höhere bzw. niedrigere Häufigkeit für die entsprechende Schriftart **32-37** eine Warnung oder aber eine Fehlermeldung mit erzwungener Reaktion auslöst.

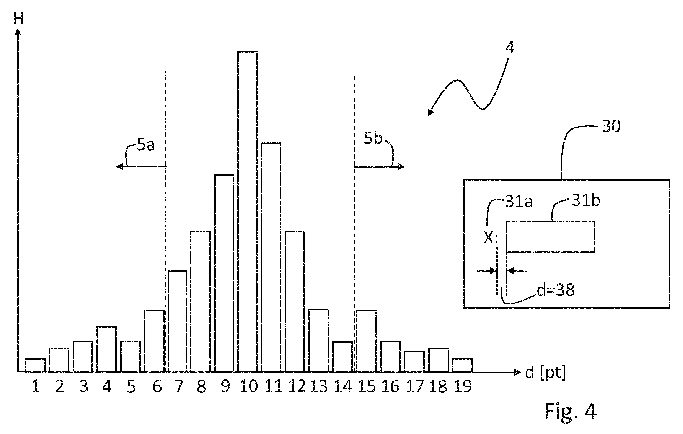

Figur 4 zeigt eine Häufigkeitsverteilung **4** der Abstände **d** zwischen zwei zusammengehörenden Elementen **31** auf einer grafischen Bedienoberfläche **30**, hier einer Bezeichnung **31 a** und einem zugehörigen Eingabefeld **31b**. Das Maximum liegt bei einem Abstand **d** von **10** Punkten. Gemäß den Anforderungen an die Ergonomie der Bedienoberflächen **30** ist ein Abstand **d** von **6** Punkten oder weniger zu klein und ist somit als eine erste Inkonsistenz **5a** zu werten. Ein Abstand von **15** Punkten oder mehr ist zu groß und somit als eine zweite Inkonsistenz **5b** zu werten. Die konkreten Grenzwerte von **d** für beide Inkonsistenzen **5a** und **5b** können beispielsweise visuell in einer Anzeige der Häufigkeitsverteilung **4** am Bildschirm gesetzt werden. Der Abstand **d** ist eine relative Positionsangabe **38** der Elemente **31 a** und **31 b** zueinander.

Weitere Beispiele für Eigenschaften, die entsprechend auf Qualität und Konsistenz geprüft werden können sind verwendete Farben, Liniendicken, Schriftgrößen, und Größen von Grafischen Elementen.

### Bezugszeichenliste

- 1: Arbeitsergebnis
- 2: Entscheidung
- 3: Ergebnis der Entscheidung 2
- 4: Häufigkeitsverteilung
- 5, 5a, 5b: Inkonsistenz im Arbeitsergebnis 1
- 6: Hyperlink auf Position 7 im Arbeitsergebnis 1
- 7: Position 7 im Arbeitsergebnis 1 mit Beitrag zu Häufigkeit H
- 10: Computerprogramm
- 11-15: Programmbibliotheken
- 30: grafische Bedienoberfläche
- 31: Element der grafischen Bedienoberfläche 30
- 31a: Bezeichner als Element 31
- 31b: Eingabefeld als Element 31
- 32-37: Schriftart für Element 31, 31a, 31b
- 38: Positionierungsangabe für Element 31, 31a, 31b
- 100: Verfahren
- 110: Ermittlung der Entscheidung 2
- 120: Auswertung des Ergebnisses 3 aus Arbeitsergebnis 1
- 130: Ermittlung der Häufigkeitsverteilung 4
- 140: Automatische Justage der Erkennung 150
- 150: Wertung als Inkonsistenz 5, 5a mit Schwellwert s
- 160: Setzen des Hyperlinks 6
- a: diskrete Möglichkeit für Hyperlink 6
- [b₁, b₂]: Bin von Zahlenwerten w für Hyperlink 6
- H: Häufigkeitswert
- I: Teilintervall
- m₁,...,mₙ: diskrete Möglichkeiten als Ergebnis 3
- P: Pause
- [p₁, p₂]: Beginn und Ende der Pause P
- σ: Standardabweichung der Häufigkeitsverteilung 4
- {t₁,...,tₙ}=:T: Zeitpunkte, zu denen Entscheidung 2 gefällt wurde
- {t₁,...,tₘ}=:Q: Zeitpunkte, für die Ergebnis 3 ausgewertet wird
- w: Zahlenwert als Ergebnis 3
- [w₁, w₂]: Intervall für Zahlenwert w
- x: vorgebene Möglichkeit m₁,...,mₙ für Inkonsistenz 5, 5a, 5b
- [y₁, y₂]: vorgegebenes Intervall für Inkonsistenz 5, 5a, 5b

## Patentansprüche

1. Verfahren (100) zur Qualitätskontrolle eines Arbeitsergebnisses (1), **gekennzeichnet durch** folgende Schritte:
• es wird eine Entscheidung (2), die bei der Erstellung des Arbeitsergebnisses (1) vielfach gefällt wurde und deren Ergebnis (3) als Auswahl einer von mehreren diskreten Möglichkeiten {m₁,...,mₙ} oder als Zahlenwert w ∈ [w₁, w₂] darstellbar ist, ermittelt (110);
• aus dem Arbeitsergebnis (1) wird das Ergebnis (3) der Entscheidung (2) für eine Vielzahl von Einzelfällen der Entscheidung (2) ausgewertet (120);
• aus den ausgewerteten Ergebnissen (3) wird eine Häufigkeitsverteilung (4) H(m₁,...,mₙ) der diskreten Möglichkeiten {m₁,...,mₙ}, bzw. eine Häufigkeitsverteilung (4) H(w) der Zahlenwerte w ∈ [w₁, w₂], ermittelt (130).

2. Verfahren (100) nach Anspruch 1,
**dadurch gekennzeichnet, dass**
eine Entscheidung (2) gewählt wird, die bei der Erstellung des Arbeitsergebnisses (1) zu den Zeitpunkten {t₁,...,tₙ}=:T gefällt wurde und dass das Ergebnis (3) der Entscheidung (2) für die Zeitpunkte {t₁,...,tₘ}=:Q, Q ⊆ T, ausgewertet wird.

3. Verfahren (100) nach Anspruch 2,
**dadurch gekennzeichnet, dass**
die Menge Q zu jedem Teilintervall I von 10 % der Zeitspanne, innerhalb der das Arbeitsergebnis (1) erstellt wurde, mindestens zwei Zeitpunkte t₁, t₂ mit t₁, t₂ ∈ I enthält.

4. Verfahren (100) nach einem der Ansprüche 2 bis 3,
**dadurch gekennzeichnet, dass**
die Menge Q zu mindestens einer zeitlichen Pause P=[p₁, p₂], die während der Erstellung des Arbeitsergebnisses (1) eingelegt wurde, mindestens zwei Zeitpunkte t₁, t₂ mit t₁<p₁<p₂<t₂ enthält.

5. Verfahren (100) nach einem der Ansprüche 1 bis 4,
**dadurch gekennzeichnet, dass**
eine oberhalb oder unterhalb eines vorgegebenen Schwellwerts s liegende absolute oder relative Häufigkeit H(x) einer vorgegebenen Möglichkeit x ∈ {m₁,...,mₙ}, bzw. eine oberhalb oder unterhalb von s liegende absolute oder relative Häufigkeit H([y₁, y₂]) von Werten aus einem vorgegebenen Intervall [y₁, y₂] ⊆ [w₁, w₂], in der Häufigkeitsverteilung (4) als Signal für eine Inkonsistenz (5, 5a, 5b) in dem Arbeitsergebnis (1) gewertet wird (150).

6. Verfahren (100) nach Anspruch 5,
**dadurch gekennzeichnet, dass**
der Schwellwert s, die Möglichkeit x, und/oder mindestens ein Endpunkt des Intervalls [y₁, y₂], aus der Höhe und/oder der Position eines Maximums der Häufigkeitsverteilung (4), und/oder aus der Standardabweichung σ der Häufigkeitsverteilung (4), ermittelt wird (140).

7. Verfahren (100) nach einem der Ansprüche 1 bis 6,
**dadurch gekennzeichnet, dass**
in der Häufigkeitsverteilung (4) mindestens ein Hyperlink (6) von mindestens einer Möglichkeit a ∈ {m₁,...,mₙ}, und/oder ihrer Häufigkeit H(a), bzw. von mindestens einem Bin [b₁, b₂] ⊆ [w₁, w₂] der Zahlenwerte w, und/oder seiner Häufigkeit H([b₁,b₂]), auf mindestens eine Position (7) in dem Arbeitsergebnis (1) gesetzt wird (160), an der eine Entscheidung (2), die zu der Häufigkeit H(a) bzw. H([b₁,b₂]) beigetragen hat, gefällt wurde.

8. Verfahren (100) nach einem der Ansprüche 1 bis 7,
**dadurch gekennzeichnet, dass**
ein Computerprogramm (10) oder ein technischer Dokumentationstext als Arbeitsergebnis (1) gewählt wird.

9. Verfahren (100) nach Anspruch 8,
**dadurch gekennzeichnet, dass**
die Verwendung einer bestimmten von mehreren verfügbaren Programmbibliotheken, m₁, ..., mₙ (11-14), als Entscheidung (2) gewählt wird.

10. Verfahren (100) nach einem der Ansprüche 1 bis 9,
**dadurch gekennzeichnet, dass**
eine grafische Bedienoberfläche (30), und/oder ihre Beschreibung in Form eines Computerprogramms (10), als Arbeitsergebnis (1) gewählt wird.

11. Verfahren (100) nach Anspruch 10,
**dadurch gekennzeichnet, dass**
die Auswahl einer von mehreren möglichen Schriftarten (32-37) für ein Darstellungselement (31, 31 a, 31 b) der Bedienoberfläche, und/oder eine absolute oder relative Positionsangabe (38) für das Darstellungselement (31, 31 a, 31 b), als Entscheidung (2) gewählt wird.

12. Computerprogrammprodukt, enthaltend maschinenlesbare Anweisungen, die, wenn sie auf einem Computer oder auf einem Steuergerät ausgeführt werden, den Computer oder das Steuergerät dazu veranlassen, ein Verfahren (100) nach einem der Ansprüche 1 bis 11 auszuführen.
